Europäisches Patentamt

European Patent Office

Office européen des brevets

(11) Veröffentlichungsnummer: **0 478 840 A1**

# EUROPÄISCHE PATENTANMELDUNG

(21) Anmeldenummer: **90119117.1**

(22) Anmeldetag: **05.10.90**

(51) Int. Cl.5: **B23K 7/08**

(43) Veröffentlichungstag der Anmeldung:
**08.04.92 Patentblatt 92/15**

(84) Benannte Vertragsstaaten:
**AT BE CH DE DK ES FR GB GR IT LI LU NL SE**

(71) Anmelder: **AUTE AG Gesellschaft für autogene Technik**
**10, Rue St. Honoré**
**CH-2000 Neuchâtel(CH)**

(72) Erfinder: **Lotz,Horst K.**
**Fasanenweg 7**
**W-6240 Königstein(DE)**

(74) Vertreter: **Blumbach Weser Bergen Kramer Zwirner Hoffmann Patentanwälte**
**Sonnenberger Strasse 100**
**W-6200 Wiesbaden 1(DE)**

(54) **Verfahren und Vorrichtung zum schnellen thermischen Trennen von Werkstücken aus Stahl oder dergleichen.**

(57) Für eine Erhöhung der Brennschneidgeschwindigkeiten wird zum schnellen thermischen Trennen bei Werkstücken aus Stahl oder ähnlichen Materialien die Reaktionsfläche bei erhöhtem Sauerstoffangebot vergrößert und der Wärmeabfluß verringert. Dabei sind zwei Brenner vorgesehen, die zur Vermeidung gegenseitiger Beeinflußung unter gleicher Einstellung aufeinander zuschneiden und stark geneigt auf das Werkstück gerichtet sind. Zur zusätzlichen Beheizung gegen den Wärmeabfluß und zum gleichzeitigen Schutz ist ein weiterer Heizbrenner vorgesehen.

Bild 1

Die Erfindung betrifft ein Verfahren zum schnellen thermischen Trennen von Werkstücken aus Stahl oder ähnlichen Materialien.

Insbesondere beim Stranggußverfahren werden durch die Erhöhung von Gießgeschwindigkeiten immer größere Anforderungen an die Brennschneidgeschwindigkeiten zum Trennen des Stahlstrangs gestellt. Die herkömmlichen Maßnahmen betreffen Düsegrößen, Heizleistungen, Schneidstrahlform und Schneidgeschwindigkeit, erlauben aber keine weiteren wesentlichen Verbesserungen, da in diesem Zusammenhang bereits alle Möglichkeiten ausgeschöpft sind.

Der Erfindung liegt daher die Aufgabe zugrunde, weitere Maßnahmen verfügbar zu machen, die eine Erhöhung von Brennschneidgeschwindigkeiten ermöglichen.

Die Erfindung besteht darin, daß bei einem Verfahren der eingangs genannten Art, die Reaktionsfläche bei erhöhtem Sauerstoffangebot vergrößert und der Wärmeabfluß verringert wird.

Vorteilhafte Aus- und Weiterbildungen des Verfahrens sind in den Unteransprüchen 2 bis 4 gekennzeichnet.

Die Erfindung macht gleichermaßen eine Brenneranordnung zur Durchführung des Verfahrens verfügbar. Die Brenneranordnung besteht darin, daß zwei Brenner vorgesehen sind, die zur Vermeidung gegenseitiger Beeinflussung unter gleicher Einstellung aufeinander zuschneiden und bis kurz vor einem Brennertreff arbeiten.

Weitere, zweckmäßige und vorteilhafte Maßnahmen im Rahmen der Erfindung sind in den weiteren Unteransprüchen gekennzeichnet.

Die Erfindung soll nachstehend anhand von Ausführungsbeispielen unter Bezugnahme auf die beigefügten Zeichnungen erläutert werden.

In den Zeichnungen zeigt:

Bild 1    eine perspektivische Darstellung der Brenneranordnung gemäß der Erfindung;

Bild 2    eine Seitenansicht, teilweise im Schnitt;

Bild 3    eine andere Seitenansicht, um 80° gedreht.

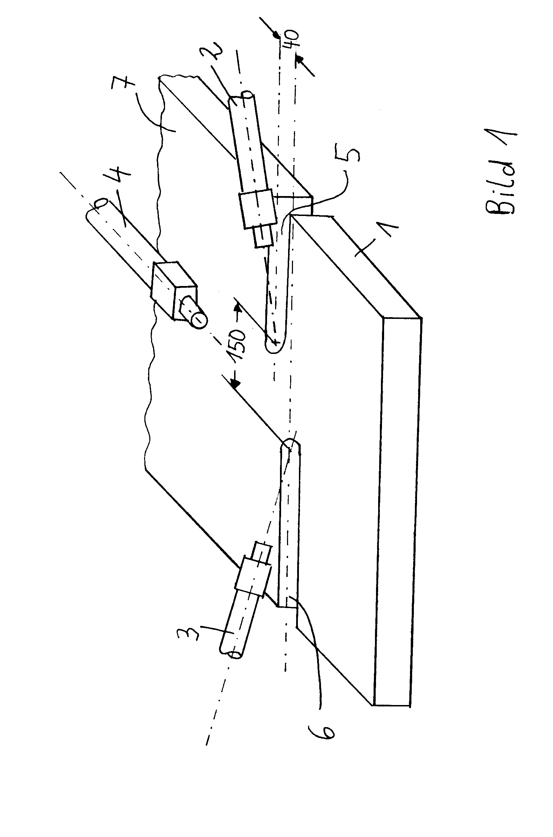

In Bild 1 ist ein Werkstück 1 dargestellt, in das ein Schneidbrenner 2 eine Schnittfuge 5 eingeschnitten hat. Ein zweiter Schneidbrenner 3 hat eine Schnittfuge 6 eingeschnitten. Mit 4 ist ein Heizbrenner bzw. eine Luftdüse bezeichnet. Beim Anheizen und Anschneiden sind die Brenner auf die obere Außenkante des Werkstückes 1 gerichtet. Die Schneidrichtung verläuft von außen nach innen und es ist unerheblich, ob der Brenner 2 die Heizflamme und den Schneidstrahl hinter sich herziehen läßt oder ob der Schneidstrahl und die Heizflamme vor dem Brenner 2 in Schneidrichtung vorlaufen. In beiden Fällen befindet sich der Schneidbrenner 2 im geringen Abstand zur Oberfläche 7 des Werkstücks 1. Diese Stellung des Schneidbrenners 2 zur Schneidrichtung erlaubt in vorteilhafter Weise ein möglichst enges Gegeneinanderschneiden der beiden Schneidbrenner 2 und 3. Dabei ist jedoch vorausgesetzt, daß ein im Winkel zur Schneidrichtung stehender Heizbrenner 4 die Schneidbrenner 2 und 3 mit seinen Strahlen vor dem gegenseitigen Verschmutzen und vor der Schlacke schützt, die wenn auch zum kleineren Teil, an der Oberfläche austritt. Grundsätzlich ist jedoch zu vermeiden, daß beim Gegeneinanderschneiden die Schneidbrenner 2 und 3 sich direkt gegenüberstehen und aufeinander zuschneiden. Demgemäß sind die Schnitte 5 und 6 der Brenner 2 bzw. 3 versetzt angeordnet, wie aus Bild 1 ersehen werden kann. Die Schneidbrenner 2 und 3 bilden einen Winkel von 10° bis 12° zur idealen Schnittlinie in der horizontalen Ebene, entsprechend der Oberfläche 7 des Werkstückes 1 und schneiden, wie ausgeführt, versetzt aufeinander zu.

In ihrer weiteren Ausbildung wird durch die Erfindung eine gegenseitige Beeinflußung der Brenner dadurch verhindert, daß ein Brenner nach oben und ein Brenner nach unten bis kurz vor der körperlichen Berührung aufeinander zuschneiden. Das zu trennende Werkstück verhindert bis dahin, daß der von oben her arbeitende Schneidstrahl durch den von unten her schneidenden Sauerstoffstrahl oder umgekehrt abgelenkt und zum Schneiden ungeeignet wird. Der jeweilige Brenner muß allerdings durch geeignete Maßnahmen gegen Schlacke und Funkenflug aus der Schneidfuge, auf seiner Seite erzeugt durch den Brenner auf der anderen Seite, geschützt werden.

Zum Anschneiden mit geringer Geschwindigkeit können die Schneidbrenner auch zur Verkürzung des Schneidweges gehoben, gesenkt oder eingeschwenkt bzw. eingedreht werden.

Nach dem Erreichen einer noch möglichst engen Endstellung vor dem Treffen der Brenner sollte einer abgeschaltet, seitlich versetzend bewegt und zurückgezogen werden. Der andere Brenner beendet den Schnitt in einem Fall unter dem flachen Winkel zur idealen Schnittfläche weiterschneidend, im anderen Fall durch die Überlagerung einer Geradeausschneidrichtung mit einer seitlichen Versetzung bis in die Schneidfuge des gegenschneidenden Brenners hinein.

Im folgenden ist ein Beispiel aufgeführt, bei dem mit dem erfindungsgemäß Verfahren wie folgt gearbeitet wurde:

Werkstück: 50 mm
Material: ST37/2
Werkstücktemperatur: ca. 62°C
Drücke:
Schneidsauerstoff 7 bar
Heizsauerstoff 2,2 bar

Erdgas 1,0 bar
Luftdruck 5,5 bis 6,0 bar.

Der Schneidvorgang führte zu folgendem Ergebnis:

Schneidfuge: 25 bis 30 mm

Schnittrauhigkeit: 10 mm

Schnittgeschwindigkeit 1200 mm/min

Bartbildung auf dem Werkstück: 4 bis 5 mm hoch, 10 bis 20 mm breit

Bartbildung unter dem Werkstück: 10 bis 12 mm hoch, 25 bis 30 mm breit

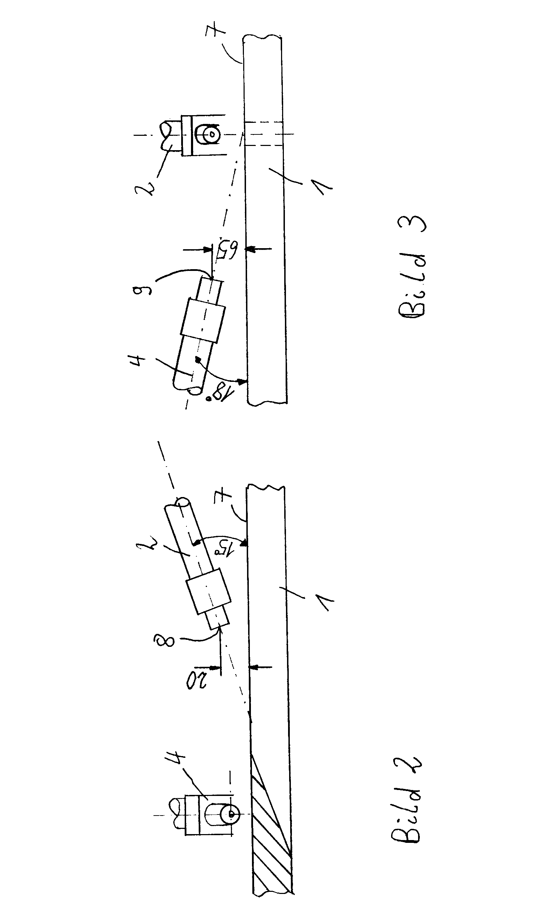

In Bild 2 ist dargestellt, daß der Schneidbrenner 2 mit einem Winkel von 15° zur Oberkante 7 des Werkstücks 1 geneigt, angeordnet ist, wobei die Mitte des Düsenaustritts 8 zwischen einem Abstand von etwa 20 mm über der Oberfläche 7 des Werkstücks 1 befindet.

Aus Bild 3 geht hervor, daß der Heizbrenner 4 mit einem Winkel von 18° zur Oberfläche 7 des Werkstücks 1 geneigt ist, unter die Mitte des Düsenaustritts 9 zwischen einem Abstand von etwa 65 mm zur Oberfläche 7 des Werkstücks 1 befindet.

Mit den erfindungsgemäßen Maßnahmen wird somit eine Erhöhung der Brennschneidgeschwindigkeit ermöglicht, in dem durch einen größeren Wärmestau die Reaktionsgeschwindigkeit und der Schlackenabfluß durch höhere Dünnflüssigkeit gefördert wird. Das erhöhte Sauerstoffangebot wird durch eine Schneiddüse mit vielfach höherem Schneidsauerstoffdurchsatz gewährleistet und die geforderte größere Reaktionsfläche bei möglichst kleinem Wärmeableitungsquerschnitt wird durch das starke Neigen des Schneidbrenners, wie dargelegt, erzeugt.

**Patentansprüche**

1. Verfahren zum schnellen thermischen Trennen von Werkstücken aus Stahl oder dergleichen, dadurch gekennzeichnet, daß die Reaktionsfläche bei erhöhtem $O_2$-Angebot vergrößert und der Wärmeabfluß verringert wird.

2. Verfahren nach Anspruch 1, dadurch gekennzeichnet, daß das Heizangebot vergrößert wird.

3. Verfahren nach Anspruch 1 oder 2, dadurch gekennzeichnet, daß die Wärmeableitungsmöglichkeit durch einen kleinen Querschnitt verringert wird.

4. Verfahren nach einem der Ansprüche 1 bis 3, dadurch gekennzeichnet, daß zwei Brenner zur Vermeidung gegenseitiger Beeinflußung unter einem Winkel oder versetzt aufeinander zu arbeiten, vorgesehen sind.

5. Brenneranordnung zur Durchführung des Verfahrens nach einem der Ansprüche 1 bis 4, dadurch gekennzeichnet, daß zwei Brenner (2, 3) vorgesehen sind, die zur Vermeidung gegenseitiger Beeinflußung unter gleicher Einstellung aufeinander zuschneiden und bis kurz vor einem Brennertreff arbeiten.

6. Anordnung nach Anspruch 5, dadurch gekennzeichnet, daß ein Brenner (2) von oben nach unten senkrecht oder geneigt, der korrespondierende Brenner (3) dagegen von unten nach oben senkrecht oder geneigt gerichtet ist.

7. Anordnung nach Anspruch 5 oder 6, dadurch gekennzeichnet, daß zur zusätzlichen Beheizung gegen den Wärmeabfluß und zum gleichzeitigen Schutz der gegeneinander schneidenden Brenner (2, 3) wenigstens ein weiterer Heizbrenner (4) im Winkel zum Schnitt und ausreichend weit vor den Schneidbrennern mitläuft.

8. Anordnung nach einem der Ansprüche 5 bis 6, dadurch gekennzeichnet, daß je nach Brennerrichtung, schräg oder versetzt, parallel gegeneinander vor einem Treffen der jeweiligen Schnittfugen ein Brenner (2), vorzugsweise der mit dem Heizbrenner (4) oder der Luftdüse abgeschaltet und danach oder gleichzeitig zurückgezogen wird.

9. Anordnung nach einem der Ansprüche 5 bis 8, dadurch gekennzeichnet, daß zum Schnitt der gegeneinander schneidenden Brenner (2, 3) mindestens ein Luftstrahl aus einer Düse (4, 3) im Winkel zum Schnitt und ausreichend weit vor den Schneidbrennern mitläuft.

10. Anordnung nach einem der Ansprüche 5 bis 9, dadurch gekennzeichnet, daß die Schneidbrenner (2, 3) langsam hebend, senkend oder eindrehend anschneiden bevor die waagrechte Schneidbewegung einsetzt.

11. Anordnung nach einem der Ansprüche 5 bis 10, dadurch gekennzeichnet, daß die Schneiddüse (2, 3) mit einem Winkel von ca. 15° zur Oberfläche (7) des Werkstücks (1) geneigt ist, und daß die Mitte des Düsenaustritts (8) zwischen einem Abstand von etwa 20 mm von der Oberfläche (7) des Werkstücks (1) befindet.

12. Anordnung nach einem der Ansprüche 5 bis 11, dadurch gekennzeichnet, daß die Heizdüse (4) mit einem Winkel von ca. 18° zur Oberfläche (7) des Werkstücks (1) geneigt ist, und daß die Mitte der Düsenöffnung (9) zwischen einem Abstand von etwa 65 mm zur Oberfläche (7) des Werkstücks (1) befindet.

Bild 1

Bild 3

Bild 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | US-A-3 852 126 (YAGUCHI ET AL)<br>* Spalte 1, Zeile 64 - Spalte 3, Zeile 27; Figuren 3-6 *<br>– – – | 1-3,4-12 | B 23 K 7/08 |
| A | GB-A-1 455 950 (VAINER AT AL)<br>* das ganze Dokument *<br>– – – – – | 1-12 | |

RECHERCHIERTE SACHGEBIETE (Int. Cl.5)

B 23 K

**Der vorliegende Recherchenbericht wurde für alle Patentansprüche erstellt**

| Recherchenort | Abschlußdatum der Recherche | Prüfer |
|---|---|---|
| Den Haag | 04 Juni 91 | HERBRETEAU D.J-P.J. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie,
    übereinstimmendes Dokument